# EUROPÄISCHE PATENTSCHRIFT

(11) **EP 1 421 427 B1**
(45) Veröffentlichungstag und Bekanntmachung des Hinweises auf die Patenterteilung: **05.07.2006**
(21) Anmeldenummer: 02791475.3
(22) Anmeldetag: 26.07.2002
(51) Int. Cl.: G02B 21/00

(54) **OPTISCHE ANORDNUNG UND SCANMIKROSKOP**
OPTICAL ARRANGEMENT AND SCAN MICROSCOPE
SYSTEME OPTIQUE ET MICROSCOPE A BALAYAGE

(30) Priorität: 30.07.2001 DE 10137155
(43) Veröffentlichungstag der Anmeldung: 26.05.2004
(73) Patentinhaber: Leica Microsystems CMS GmbH, 35578 Wetzlar (DE)
(72) Erfinder: BIRK, Holger, 74909 Meckesheim (DE)
(74) Vertreter: Reichert, Werner Franz
(86) Internationale Anmeldenummer: PCT/EP2002/008380
(87) Internationale Veröffentlichungsnummer: WO 2003/012516

(56) Entgegenhaltungen:
- EP-A- 0 422 956
- DE-A- 19 906 757
- DE-A- 19 944 355
- US-A- 4 541 694
- US-A- 6 157 660

## Beschreibung

Die Erfindung betrifft eine optische Anordnung zur räumlichen Separierung eines Beleuchtungslichtstrahls und eines Detektionslichtstrahls mit einem akustooptischen Bauteil und mit einem ein Kompensationselement, das eine von dem akustooptischen Bauteil durch Doppelbrechung verursachte Aufspaltung des Detektionslichtstrahls bei einmaligen Durchlauf kompensiert.

In der Scanmikroskopie wird eine Probe mit einem Lichtstrahl beleuchtet, um das von der Probe emittierte Detektionslicht, als Reflexions- oder Fluoreszenzlicht, zu beobachten. Der Fokus eines Beleuchtungslichtstrahles wird mit Hilfe einer steuerbaren Strahlablenkeinrichtung, im Allgemeinen durch Verkippen zweier Spiegel, in einer Probenebene bewegt, wobei die Ablenkachsen meist senkrecht aufeinander stehen, so dass ein Spiegel in x-, der andere in y-Richtung ablenkt. Die Verkippung der Spiegel wird beispielsweise mit Hilfe von Galvanometer-Stellelementen bewerkstelligt. Die Leistung des vom Objekt kommenden Detektionslichtes wird in Abhängigkeit von der Position des Abtaststrahles gemessen. Üblicherweise werden die Stellelemente mit Sensoren zur Ermittlung der aktuellen Spiegelstellung ausgerüstet. Das Beleuchtungslicht wird über einen Strahlteiler eingekoppelt. Das vom Objekt kommende Fluoreszenz- oder Reflexionslicht passiert den Strahlteiler und gelangt anschließend zu den Detektoren.

Speziell in der konfokalen Scanmikroskopie wird ein Objekt mit dem Fokus eines Lichtstrahles in drei Dimensionen abgetastet.

Ein konfokales Scanmikroskop umfasst im Allgemeinen eine Lichtquelle, eine Fokussieroptik, mit der das Licht der Quelle auf eine Lochblende - die sog. Anregungsblende - fokussiert wird, einen Strahlteiler, eine Strahlablenkeinrichtung zur Strahlsteuerung, eine Mikroskopoptik, eine Detektionsblende und die Detektoren zum Nachweis des Detektions- bzw. Fluoreszenzlichtes. Das Beleuchtungslicht wird über einen Strahlteiler eingekoppelt. Das vom Objekt kommende Fluoreszenz- oder Reflexionslicht gelangt über die Strahlablenkeinrichtung zurück zum Strahlteiler, passiert diesen, um anschließend auf die Detektionsblende fokussiert zu werden, hinter der sich die Detektoren befinden. Diese Detektionsanordnung wird Descan-Anordnung genannt. Detektionslicht, das nicht direkt aus der Fokusregion stammt, nimmt einen anderen Lichtweg und passiert die Detektionsblende nicht, so dass man eine Punktinformation erhält, die durch sequentielles Abtasten des Objekts mit dem Fokus des Beleuchtungslichtstrahles zu einem dreidimensionalen Bild führt. Meist wird ein dreidimensionales Bild durch schichtweise Bilddatennahme erzielt.

Aus der Offenlegungsschrift Leica DE 199 06 757 A1 ist eine optische Anordnung im Strahlengang einer zur Fluoreszenzanregung geeigneten Lichtquelle, vorzugsweise im Strahlengang eines konfokalen Laser-Scanning-Mikroskops, mit mindestens einem spektral selektiven Element zum Einkoppeln des Anregungslichts mindestens einer Lichtquelle in das Mikroskop und zum Ausblenden des am Objekt gestreuten und reflektierten Anregungslichts bzw. der Anregungswellenlänge aus dem über den Detektionsstrahlengang vom Objekt kommenden Licht, bekannt. Die Anordnung ist zur variablen Ausgestaltung bei einfachster Konstruktion dadurch gekennzeichnet, dass durch das spektral selektive Element Anregungslicht unterschiedlicher Wellenlänge ausblendbar ist. Alternativ ist eine solche optische Anordnung dadurch gekennzeichnet, dass das spektral selektive Element auf die auszublendende Anregungswellenlänge einstellbar ist. Weiterhin ist in der genannten Schrift ausgeführt, dass das spektral selektive Element als AOTF (Acousto-Optical-Tunable-Filter) oder als AOD (Acousto-Optical-Deflector) ausgeführt sein kann. In der genannten Offenlegungsschrift ist beschrieben, dass das spektral selektive Element eine räumlich spektrale Auffächerung verursachen kann, die beispielsweise mit drei weiteren optischen Bauteilen kompensierbar ist.

Aus der Offenlegungsschrift DE 198 59 314 A1 ist eine Anordnung eines lichtbeugenden Elementes zur Separierung von Anregungs- und Emissionslicht in einem mikroskopischen Strahlengang, vorzugsweise in einem konfokalen Mikroskop, und insbesondere in einem Laser-Scanning-Mikroskop, bekannt, wobei das lichtbeugende Element sowohl vom Anregungslicht als auch vom Emissionslicht durchlaufen wird und mindestens eine Wellenlänge der Anregung durch Beugen beeinflusst, während andere von der Probe emittierte Wellenlängen das Element unbeeinflusst durchlaufen und dadurch räumlich vom Anregungslicht getrennt werden. Die Anordnung beinhaltet einen AOTF.

Aus der Offenlegungsschrift DE 199 44 355 A1 ist eine optische Anordnung im Strahlengang eines Laser-Scanning-Mikroskops, mit mindestens einem auf die Wellenlänge des Anregungslichts einer Lichtquelle einstellbaren spektral selektiven Element , welches Anregungslicht der Lichtquelle in das Mikroskop einkoppelt, das an einem Objekt gestreute und reflektierte Anregungslicht aus dem Detektionsstrahlengang ausblendet und das vom Objekt kommende Detektionslicht nicht ausblendet, bekannt. Die optische Anordnung ist zur konstruktiven Vereinfachung der bekannten Anordnung sowie zur Erweiterung der bislang möglichen Detektionsvarianten dadurch gekennzeichnet, dass dem Element ein weiteres optisches Bauteil nachgeordnet ist, nach dessen Durchlaufen die dispersiven und/oder doppelbrechenden Eigenschaften des Detektionslichts detektierbar und In einer bevorzugen Ausgestaltung koaxial vereinigt sind.

Die genannten Scanmikroskope haben gegenüber Scanmikroskopen, bei denen die Trennung von Beleuchtungs- und das Detektionslicht mit einem Strahlteiler realisiert ist, den Vorteil der spektralen Flexibilität, da das akustooptische Bauteil durch Ansteuerung mit Schallwellen unterschiedlicher Frequenz auf jede beliebige optische Wellenlänge für Beleuchtung bzw. Detektionslicht einstellbar ist. Darüber hinaus ist die spektrale Trennung bei diesen Scanmikroskopen um ein Vielfaches besser, als bei Scanmikroskopen mit Strahlteilern.

Ein Nachteil von optischen Anordnungen mit einem akustooptischen Bauteil zur Separierung von Beleuchtungs- und Detektionslicht und von Scanmikroskopen mit einem akustooptischen Bauteil zur Separierung von Beleuchtungs- und Detektionslicht besteht darin, dass das akustooptische Bauteil doppelbrechend ist, was zu einer störenden Aufspaltung des Detektionslichtstrahles führt. Außerdem weist das akustooptische Bauteil meist eine Prismenwirkung auf, was eine spektrale Aufspaltung des Detektionslichtstrahles verursacht. Die bekannten Anordnungen kompensieren diese Effekte nur unzureichend und unter Inkaufnahme hoher Verluste an Detektionslichtleistung. Insbesondere Anordnungen, die drei weitere optische Bauteile zur Kompensation benötigen, sind teuer und aufwendig in der Justierung.

Der Erfindung liegt daher die Aufgabe zugrunde, eine optische Anordnung anzugeben, die eine Separierung eines Beleuchtungslichtstrahles und eines Detektionslichtstrahles verlustarm und weitgehend ohne störende Aufspaltungen ermöglicht.

Die Aufgabe wird durch eine optische Anordnung gemäß Anspruch 1 gelöst.

Die Erfindung hat den Vorteil, dass die Universalität und Flexibilität akustooptischer Bauteile bei der Separierung eines Beleuchtungslichtstrahles und eines Detektionslichtstrahles weitgehend ohne Einschränkungen nutzen zu können.

In einer bevorzugten Ausgestaltung des Scanmikroskops bzw. der optischen Anordnung ist das akustooptische Bauteil als AOTF (Acousto-Optical-Tunable-Filter) ausgestaltet. Eine Ausgestaltungsform mit einem AOD (Acousto-Optical-Deflector) oder einem AOM (Acousto-Optical-Modulator) ist auch realisierbar. Das akustooptische Element ist von einer akustischen Welle durchlaufen, die in Abhängigkeit von ihrer Frequenz nur mit Licht einer Wellenlänge wechselwirkt. Licht anderer Wellenlängen bleibt von der akustischen Welle unbeeinflusst. Die akustische Welle wird vorzugsweise von einem elektrisch angesteuerten Piezo-Schallerzeuger generiert, der von einer Hochfrequenzquelle angesteuert ist. Die Frequenz der Hochfrequenz wird so gewählt, dass nur die Anteile der gewünschten Wellenlänge des Beleuchtungslichtstrahls zur Probe gelangen. Die übrigen, von der akustischen Anregung nicht beeinflussten Anteile des Beleuchtungslichtstrahls werden in eine Strahlfalle gelenkt. Durch Variation der Amplitude der akustischen Welle ist die Leistung des aus dem Beleuchtungslichtstrahl ausgekoppelten Strahls auswählbar. Wenn der Detektionslichtstrahl Fluoreszenzlicht beinhaltet, das naturgemäß in der Wellenlänge gegenüber dem Beleuchtungslichtstrahl verschoben ist, so passiert der Detektionslichtstrahl das akustooptische Bauteil ohne Beeinflussung durch die Schallwelle.

In einer bevorzugten Ausgestaltung kompensiert das Kompensationselement eine von dem akustooptischen Bauteil durch Dispersion verursachte Aufspaltung des Detektionslichtstrahls zumindest weitgehend. In einer besonders einfachen Ausführung sind die Grenzflächen des Kompensationselements derart angeordnet, dass der spektral aufgespaltene, fächerförmig divergierende Detektionslichtstrahl nach dem Durchlaufen des Kompensationselements zumindest parallel verläuft. Der Abstand von akustooptischem Bauteil und Kompensationselement ist in dieser Ausführung möglichst klein gewählt, um eine zu große räumliche Aufspaltung des Detektionslichtstrahls zwischen akustooptischem Bauteil und Kompensationselement zu vermeiden. Räumliche Aufspaltungen in der Größenordnung von einem halben Strahldurchmesser sind akzeptabel.

In einer ganz besonders bevorzugten Ausführung weisen das Kompensationselement und das akustooptische Bauteil die gleiche äußere Form auf. Das Kompensationselement und das akustooptische Bauteil sind bezüglich der Ausbreitungsrichtung des auf das akustooptische Bauteil treffenden Detektionslichtstrahls gegeneinander um 180 Grad verdreht orientiert. In der Regel ist das so orientierte Kompensationselement seitlich zu der durch die Ausbreitungsrichtung des auf das akustooptische Bauteil treffenden Detektionslichtstrahls definierten Achse versetzt, damit der Detektionslichtstrahl auf das Kompensationselement trifft. Vorzugsweise ist das Kompensationselement aus dem gleichen Material hergestellt, wie das akustooptische Bauteil und hat die gleiche Kristallstruktur. Die durch die doppelbrechenden Eigenschaften des akustooptischen Bauteils hervorgerufene Aufspaltung des Detektionslichtstrahles in Teilstrahlen unterschiedlicher Polarisation wird aufgehoben.

In einer bevorzugten Ausgestaltung ist das akustooptische Bauteil nicht nur mit der zu der gewünschten Wellenlänge des Beleuchtungslichtstrahles korrespondierenden ersten Hochfrequenz angesteuert, denn dies blendet nur die Anteile der Wellenlänge des Beleuchtungslichtstrahles mit einer Polarisationsrichtung vollständig aus. Die Anteile der anderen Polarisationsrichtung werden durch Ansteuerung des akustooptischen Bauteils mit einer weiteren Hochfrequenz, die sich von der ersten Hochfrequenz unterscheidet, weitgehend restlos ausgeblendet.

In einer weiteren Ausführungsform ist das Kompensationselement ein weiteres akustooptisches Bauteil. Ganz besonders vorteilhaft ist es, das Kompensationselement auch mit einer Hochfrequenz anzusteuern, um im Detektionslichtstrahl verbliebene Anteile mit der Wellenlänge des Beleuchtungslichtstrahles auszublenden.

In einer anderen Ausführungsform ist eine Temperaturstabilisierung des akustooptischen Bauteils bzw. des Kompensationselements vorgesehen. In einer weiteren Ausführungsvariante ist zur Vermeidung von Nachteilen durch Temperaturschwankungen oder von Schwankungen der Wellenlänge des Beleuchtungslichtstrahls vorgesehen, die Hochfrequenz in Abhängigkeit von der Temperatur zu steuem oder zu regeln. Eine andere Variante sieht in Verwirklichung dieses Ziels vor, die Wellenlänge des Beleuchtungslichtstrahles in Abhängigkeit von der Temperatur zu steuem oder zu regeln.

In einer bevorzugten Ausgestaltung ist dem akustooptische Bauteil und dem Kompensationselement eine Vorrichtung zur Generierung eines Strahlversatzes nachgeordnet. Hierdurch wird erreicht, dass die Strahlachse des Detektionslichtstrahles beim Einlaufen in die optische Anordnung zur Strahlachse beim Auslaufen koaxial oder zumindest parallel ist. Dies vereinfacht die Justierbarkeit der optischen Anordnung bzw. des Scanmikroskops; außerdem ist die Anordnung in einem Scanmikroskop in dieser Ausgestaltung leichter gegen einen konventionellen Strahlteiler austauschbar.

In einer besonders bevorzugten Ausführung ist das akustooptische Bauteil mit dem Kompensationselement verkittet. In einer anderen Ausführung ist ein Zwischenelement vorgesehen, das mit dem akustooptische Bauteil und mit dem Kompensationselement verkittet ist. Die verkitteten Ausführungen haben den Vorteil, dass Lichtleistungsverluste durch Reflexionen an den einander zugewandten Grenzflächen vom akustooptischen Bauteil und vom Kompensationselement weitgehend vermeidbar sind. Am Zwischenelement ist vorzugsweise ein Eintrittsfenster für einen Beleuchtungslichtstrahl vorgesehen.

In der Zeichnung ist der Erfindungsgegenstand schematisch dargestellt und wird anhand der Figuren nachfolgend beschrieben, wobei gleich wirkende Elemente mit denselben Bezugszeichen versehen sind. Dabei zeigen:
- Fig. 1: ein erfindungsgemäßes Scanmikroskop,
- Fig.2: eine erfindungsgemäße optische Anordnung,
- Fig. 3: eine weitere optische Anordnung,
- Fig. 4: eine weitere optische Anordnung und
- Fig. 5: eine weitere optische Anordnung.

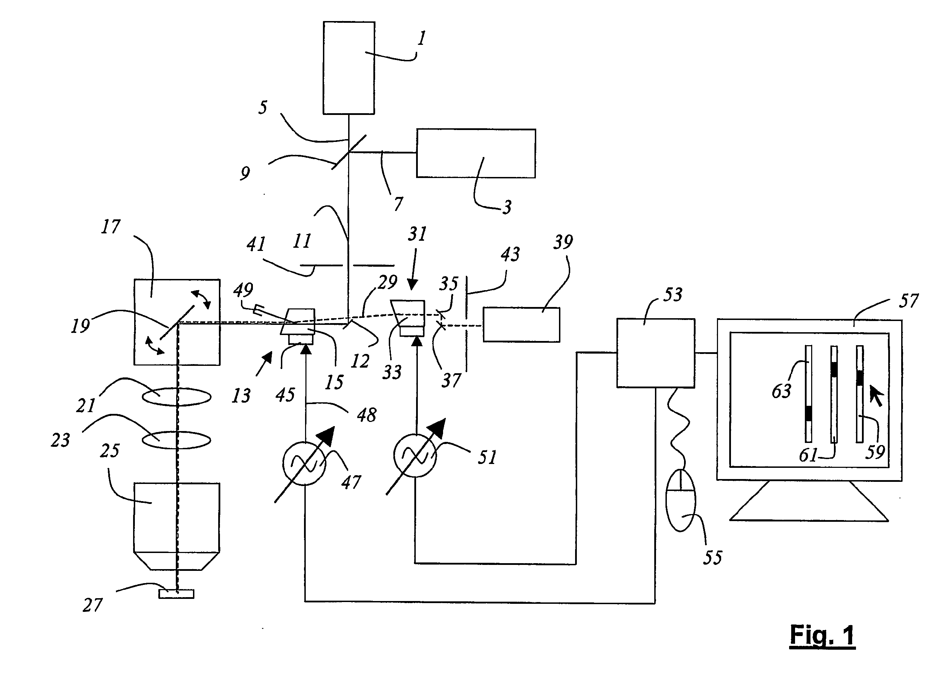

Fig. 1 zeigt ein erfindungsgemäßes Scanmikroskop, das als konfokales Scanmikroskop ausgeführt ist, mit zwei Lasern 1, 3, deren Emissionslichtstrahlen 5, 7, die unterschiedliche Wellenlängen aufweisen, mit dem dichroitischen Strahlvereiniger 9 zu einem Beleuchtungslichtstrahl 11 vereinigt werden. Das Scanmikroskop weist ein akustooptisches Bauteil 13 auf, das als AOTF 15 ausgeführt ist. Der Beleuchtungslichtstrahl 11 wird von einem Umlenkspiegel 12 zum akustooptischen Bauteil 13 reflektiert. Vom akustooptischen Bauteil 13 gelangt der Beleuchtungslichtstrahl 11 auf eine Strahlablenkeinrichtung 17, die einen kardanisch aufgehängten Scanspiegel 19 beinhaltet, und den Beleuchtungslichtstrahl 11 durch die Scanoptik 21, die Tubusoptik 23 und das Objektiv 25 über bzw. durch die Probe 27 führt. Der von der Probe kommende Detektionslichtstrahl 29 durchläuft in umgekehrter Richtung die Scanoptik 21, die Tubusoptik 23 und das Objektiv 25 und gelangt über den Scanspiegel 19 zum akustooptischen Bauteil 13, das den Detektionslichtstrahl 29 einem Kompensationselement 31, das als weiteres akustooptisches Bauteil 33 ausgeführt ist, zuführt. Nach Durchlaufen des Kompensationselements 31 trifft der Detektionslichtstrahl 29 auf ein Spiegelpaar aus einem ersten Spiegel 35 und einem zweiten Spiegel 37. Das Spiegelpaar dient dazu, den Detektionslichtstrahl 29 auf die gewünschte Strahlachse, nämlich die Strahlachse, die der Detektionslichtstrahl 29 beim Austreten aus der Strahlablenkeinrichtung 17 definiert, zu bringen. Das Spiegelpaar leitet den Detektionslichtstrahl 29 dem Detektor 39, der als Multibanddetektor ausgeführt ist, zu. Der Beleuchtungslichtstrahl 11 ist in der Zeichnung als durchgezogene Linie und der Detektionslichtstrahl 29 als gestrichelte Linie dargestellt. Das bei einem konfokalen Scanmikroskop üblicherweise vorgesehene Beleuchtungspinhole 41 und das Detektionspinhole 43 sind der Vollständigkeit halber schematisch eingezeichnet. Weggelassen sind wegen der besseren Anschaulichkeit hingegen einige optische Elemente zur Führung und Formung der Lichtstrahlen. Diese sind einem auf diesem Gebiet tätigen Fachmann hinlänglich bekannt. Das akustooptische Bauteil 13, das zum Selektieren der Anteile des Beleuchtungslichtstrahles der ausgewählten Wellenlängen dient, ist als AOTF 15 ausgestaltet, der von einer akustischen Welle durchlaufen ist. Die akustische Welle wird von einem elektrisch angesteuerten Piezo-Schallerzeuger 45 generiert. Die Ansteuerung erfolgt von einer Hochfrequenzquelle 47 aus, die eine elektromagnetische Hochfrequenzwelle, die mehrere einstellbare HF-Frequenzen aufweist, erzeugt. Die Übertragung der elektromagnetischen Hochfrequenzwelle erfolgt über ein Koaxialkabel 48. Die HF-Frequenzen sind so gewählt, dass nur die Anteile der gewünschten Wellenlängen des Beleuchtungslichtstrahls 11 zur Strahlablenkeinrichtung 17 gelangen. Die übrigen, von der akustischen Anregung nicht beeinflussten Anteile des Beleuchtungslichtstrahls 11 werden in eine Strahlfalle 49 gelenkt. Durch Variation der Amplitude der akustischen Welle ist die Leistung des Lichtes der gewünschten Wellenlängen des Beleuchtungslichtstrahls 11 auswählbar. Kristallschnitt und Orientierung des akustooptischen Bauteils 13 sind dabei so gewählt, dass bei gleicher Einkoppelrichtung verschiedene Wellenlängen in die gleiche Richtung abgelenkt werden. Das weitere akustooptische Bauteil 33 ist ebenfalls als AOTF ausgeführt und wird von einer weiteren Hochfrequenzquelle 51 mit einer weiteren elektromagnetischen Hochfrequenzwelle angesteuert. Die HF-Frequenz der weiteren elektromagnetischen Hochfrequenzwelle ist derart gewählt, dass die Anteile des Detektionslichtstrahles 29, die die Wellenlänge des Beleuchtungslichtstrahles 11 aufweisen, ausgeblendet werden. Zum Auswählen der HF-Frequenzen ist ein Computer 53 vorgesehen. Der Computer 53 steuert entsprechend der Benutzervorgabe die Hochfrequenzquelle 47 und die weitere Hochfrequenzquelle 51. Der Benutzer nimmt Einstellungen mit Hilfe der Computermaus 55 vor. Auf dem Monitor 57 sind für jede ausgewählte HF-Frequenz ein Slider 59, 61, 63 dargestellt, der zur Einstellung der Amplitude dient.

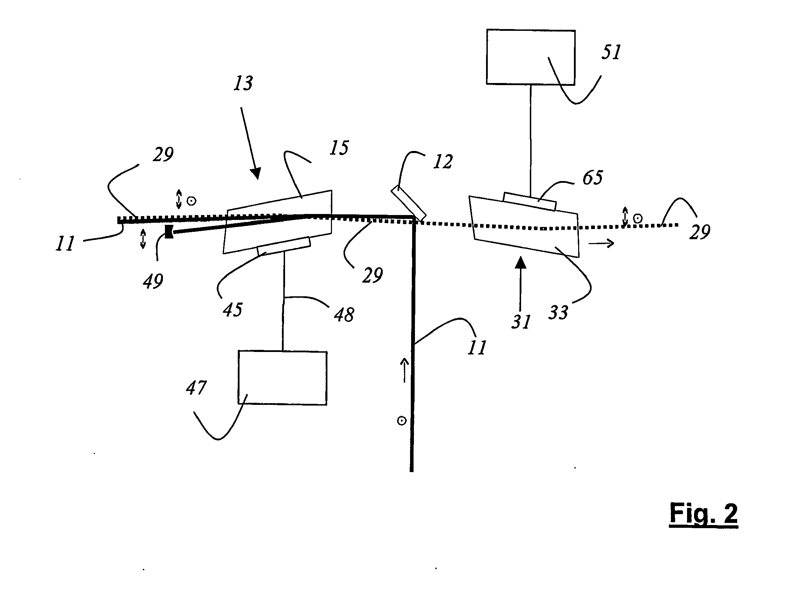

Fig. 2 zeigt eine erfindungsgemäße optische Anordnung. Der linear polarisierte Beleuchtungslichtstrahl 11, der eine sagittale Polarisationsrichtung aufweist, wird von einem Umlenkspiegel 12 zu einem akustooptischen Bauteil 13, das als AOTF 15 ausgeführt ist, reflektiert. Das akustooptische Bauteil 13, das zum Selektieren der Anteile des Beleuchtungslichtstrahles der ausgewählten Wellenlängen dient, ist als AOTF 15 ausgestaltet, der von einer akustischen Welle durchlaufen ist. Die akustische Welle wird von einem elektrisch angesteuerten Piezo-Schallerzeuger 45 generiert. Die Ansteuerung erfolgt von einer Hochfrequenzquelle 47 aus, die eine elektromagnetische Hochfrequenzwelle, die mehrere einstellbare HF-Frequenzen aufweist, erzeugt. Die Übertragung der elektromagnetischen Hochfrequenzwelle erfolgt über ein Koaxialkabel 48. Der Beleuchtungslichtstrahl 11 verlässt das akustooptische Element 13 mit um 90 Grad gedrehter Polarisationsrichtung, also mit tangentialer Polarisationsrichtung. Koaxial zum austretenden Beleuchtungslichtstrahl 11 tritt ein Detektionslichtstrahl 29 in das akustooptische Bauteil ein. Der Detektionslichtstrahl weist sowohl Anteile mit sagittaler, als auch mit tangentialer Polarisationsrichtung auf. Der Detektionslichtstrahl durchläuft den AOTF 15, wobei Anteile, die die Wellenlänge des Beleuchtungslichtstrahles aufweisen, weitgehend ausgeblendet werden. Die Ausblendung ist jedoch nur für die Anteile mit tangentialer Polarisationsrichtung vollständig. Nach dem Durchlaufen des AOTF 15 trifft der Detektionslichtstrahl 29 auf ein Kompensationselement 31, das als weiteres akustooptisches Bauteil 33 ausgeführt ist. Das weitere akustooptische Bauteil 33 ist ebenfalls als AOTF ausgeführt und wird von einer weiteren Hochfrequenzquelle 51 mit einer weiteren elektromagnetischen Hochfrequenzwelle angesteuert. Die HF-Frequenz der weiteren elektromagnetischen Hochfrequenzwelle ist derart gewählt, dass die Anteile des Detektionslichtstrahles 29, die die Wellenlänge des Beleuchtungslichtstrahles 11 und eine saggitale Polarisationsrichtung aufweisen, ausgeblendet werden. Die Erzeugung der Schallwelle erfolgt im Kompensationselement 31 ebenfalls mit einem elektrisch angesteuerten Piezo-Schallerzeuger 65. Das Kompensationselement 31 und das akustooptische Bauteil 13 weisen die gleiche äußere Form und die gleiche Kristallstruktur auf. Das Kompensationselement 31 und das akustooptische Bauteil 13 sind bezüglich der Ausbreitungsrichtung des auf das akustooptische Bauteil treffenden Detektionslichtstrahls 29 gegeneinander um 180 Grad verdreht orientiert. In der Regel ist das so orientierte Kompensationselement seitlich zu der durch die Ausbreitungsrichtung des auf das akustooptische Bauteil treffenden Detektionslichtstrahls definierten Achse versetzt, damit der Detektionslichtstrahl auf das Kompensationselement trifft.

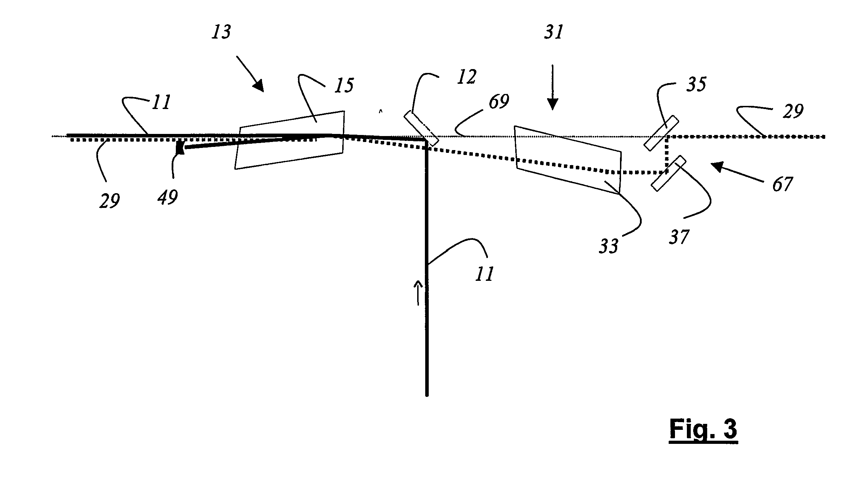

Fig. 3 zeigt eine weitere optische Anordnung, die im Wesentlichen der in Fig. 2 beschriebenen Anordnung entspricht. Zusätzlich ist als Vorrichtung zur Generierung eines Strahlversatzes ein Spiegelpaar 67 vorgesehen. Nach Durchlaufen des Kompensationselements 31 trifft der Detektionslichtstrahl 29 auf das Spiegelpaar 67 aus einem ersten Spiegel 35 und einem zweiten Spiegel 37. Das Spiegelpaar dient dazu, den Detektionslichtstrahl 29 auf die gewünschte Achse 69 zu bringen.

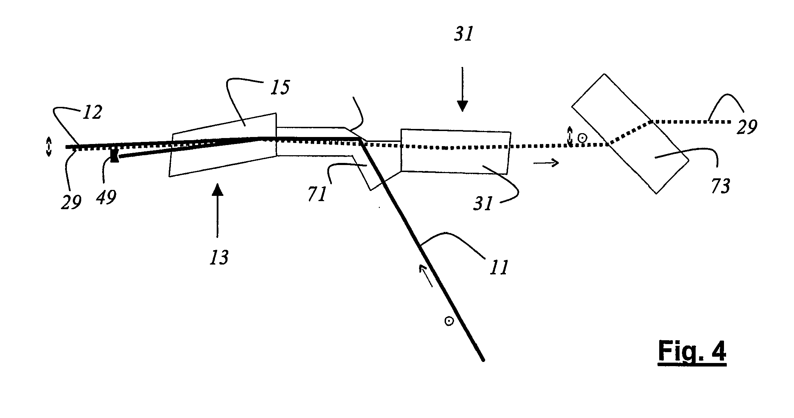

Fig. 4 zeigt eine weitere optische Anordnung. Bei dieser Anordnung ist ein Zwischenelement 71, das mit dem akustooptischen Bauteil 13 und mit dem Kompensationselement 31 verkittet ist, vorgesehen. In dieser Anordnung kommt es an den einander zugewandten Grenzflächen des Kompensationselements 31 und des akustooptischen Bauteils 13 nicht zu störenden Reflexionen. Der Brechungsindex des Zwischenelements 71 und der des Kitts ist an die Brechungsindizes des Kompensationselements 31 und des akustooptischen Bauteils 13 angepasst. Dem Kompensationselement 31 ist als Vorrichtung zur Generierung eines Strahlversatzes ein Glasblock 73 mit möglichst hohem Brechungsindex nachgeordnet, der einerseits den Detektionslichtstrahl 29 auf die gewünschte Achse bricht und andererseits eine durch das akustooptische Bauteil 13 oder durch das Kompensationselement 31 verursachte spektrale Aufspaltung kompensiert.

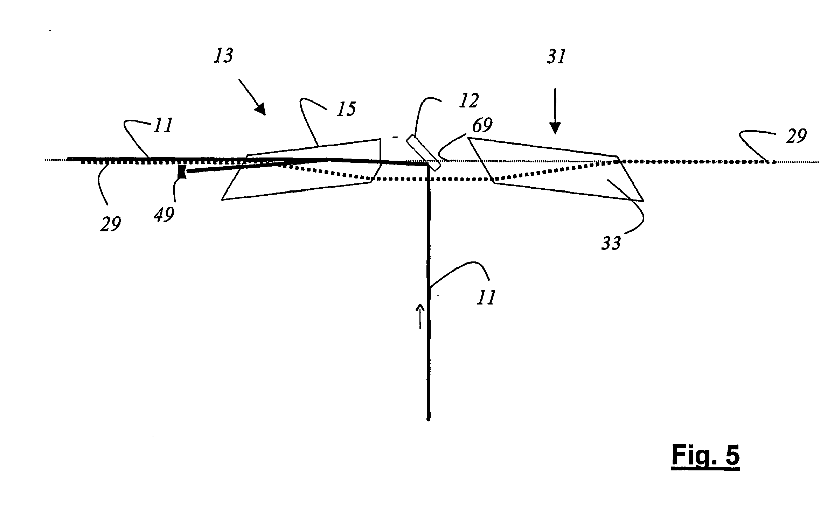

Fig. 5 zeigt eine weitere optische Anordnung. Das akustooptische Bauteil ist in dieser Anordnung so aufgebaut, dass der in das akustooptische Bauteil eintretende Beleuchtungslichtstrahl und der aus dem Bauteil austretende Detektionslichtstrahl je ein eigenes Ein- bzw. Austrittsfenster hat. Diese optische Anordnung hat den Vorteil, dass der Detektionslichtstrahl zwar eine spektrale Auffächerung erfährt, der aufgefächerte Detektionslichtstrahl jedoch zwischen dem akustooptischen Bauteil und dem Kompensationselement nahezu parallel verläuft, was die Kompensation durch das Kompensationselement verbessert.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

### Bezugszeichenliste:

- 1: Laser
- 3: Laser
- 5: Emissionslichtstrahl
- 7: Emissionslichtstrahl
- 9: Strahlvereiniger
- 11: Beleuchtungslichtstrahl
- 12: Umlenkspiegel
- 13: akustooptisches Bauteil
- 15: AOTF
- 17: Strahlablenkeinrichtung
- 19: Scanspiegel
- 21: Scanoptik
- 23: Tubusoptik
- 25: Objektiv
- 27: Probe
- 29: Detektionslichtstrahl
- 31: Kompensationselement
- 33: weiteres akustooptisches Bauteil
- 35: erster Spiegel
- 37: zweiter Spiegel
- 39: Detektor
- 41: Beleuchtungspinhole
- 43: Detektionspinhole
- 45: Piezo-Schallerzeuger
- 47: Hochfrequenzquelle
- 48: Koaxialkabel
- 49: Strahlfalle
- 51: weitere Hochfrequenzquelle
- 53: Computer
- 55: Computermaus
- 57: Monitor

- 59: Slider
- 61: Slider
- 63: Slider
- 65: Piezo-Schallerzeuger
- 67: Spiegelpaar
- 69: Achse
- 71: Zwischenelement
- 73: Glasblock

## Patentansprüche

1. Optische Anordnung zur räumlichen Separation eines Beleuchtungsllchtstrahls (11) und eines in umgekehrter Richtung laufenden Detektionslichtstrahls (29) mit einem akustooptischen Bauteil (13) und mit einem Kompensationselement (31), das eine von dem akustooptischen Bauteil (13) durch Doppelbrechung verursachte Aufspaltung des Detektionslichtstrahls (29) bei einmaligen Durchlauf kompensiert, und wobei des akustooptische Bauteil (13) und das Kompensationselement (31) derart angeordnet sind, dass des Beleuchtungslichtstrahl (11) nur das akustooptische Bauteil (13) durchläuft, **dadurch gekennzeichnet, dass** das Kompensationselement (31) und das akustooptische Bauteil (13) die gleiche äußere Form aufweisen, aus dem gleichen Material hergestellt sind und die gleiche Kristallstruktur besitzen, dass das Kompensationselement (31) ein weiteres akustooptisches Bauteil (33) ist, und dass das Kompensationselement (31) und das akustooptische Bauteil (13) bezüglich der Ausbreitungsrichtung des auf das akustooptische Bauteil treffenden Detektionslichtstrahls (29) gegeneinander um 180 Grad verdreht orientiert sind.

2. Optische Anordnung nach Anspruch 1, **dadurch gekennzeichnet, dass** das akustooptische Bauteil (13) ein AOTF (Acousto-Optical-Tunable-Filter) (15) oder ein AOD (Acousto-Optical-Deflector) oder ein AOM (Acousto-Optieal-Modulator) ist.

3. Optische Anordnung nach Anspruch 1, **dadurch gekennzeichnet, dass** das Kompensationselement (31) eine von dem akustooptischen Bauteil (13) durch Dispersion verursachte Aufspaltung des Detektionslichtstrahls (29) kompensiert.

4. Optische Anordnung nach Anspruch 1, **dadurch gekennzeichnet, dass** dem akustooptischen Bauteil (13) und dem Kompensationselement (31) eine Vorrichtung zur Generierung eines Strahlversatzes nachgeordnet ist.

5. Optische Anordnung nach einem der Ansprüche 1 bis 4, **dadurch gekennzeichnet, dass** das akustooptische Bauteil (13) und das Kompensationselement (31) miteinander verkittet sind.

6. Optische Anordnung nach einem der Ansprüche 1 bis 4, **dadurch** gekennzelchnet, dass zwischen dem akustooptischen Bauteil (13) und dem Kompensationselement (31) ein Zwischenelement vorgesehen ist, das mit dem akustooptische Bauteil (13) und mit dem Kompensationselement (31) verkittet ist.

7. Optische Anordnung nach einem der Ansprüche 1 bis 6, **dadurch gekennzeichnet, dass** das Kompensationselement mit einer Hochfrequenz ansteuerbar ist, um im Detektionslichtstrahl verbliebene Anteile mit der Wellenlänge des Beleuchtungslichtstrahles auszublenden.

8. Scanmikroskop mit einer optischen Anordnung nach einem der Ansprüche 1 bis 7.

## Claims

1. Optical arrangement for spatially separating an illumination light beam (11) and a detection light beam (29), running in the reverse direction, having an acousto-optical component (13) and having a compensation element (31) which in a single traverse compensates a splitting of the detection light beam (29) caused through birefringence by the acousto-optical component (13), the acousto-optical component (13) and the compensation element (31) being arranged in such a way that the illumination light beam (11) traverses only the acousto-optical component (13), **characterized in that** the compensation element (31) and the acousto-optical component (13) have the same external form, are produced from the same material and have the same crystal structure, **in that** the compensation element (31) is a further acousto-optical component (13), and **in that** the compensation element (31) and the acousto-optical component (13) are oriented in a fashion mutually rotated by 180 degrees with reference to the direction of propagation of the detection light beam (29) striking the acousto-optical component.

2. Optical arrangement according to Claim 1, **characterized in that** the acousto-optical component (13) is an AOTF (Acousto-Optical-Tunable-Filter) (15) or an AOD (Acousto-Optical-Deflector) or an AOM (Acousto-Optical-Modulator).

3. Optical arrangement according to Claim 1, **characterized in that** the compensation element (31) compensates a splitting of the detection light beam (29) caused through dispersion by the acousto-optical component (13).

4. Optical arrangement according to Claim 1, **characterized in that** a device for generating a beam offset is arranged downstream of the acousto-optical component (13) and the compensation element (31).

5. Optical arrangement according to one of Claims 1 to 4, **characterized in that** the acousto-optical component (13) and the compensation element (31) are cemented to one another.

6. Optical arrangement according to one of Claims 1 to 4, **characterized in that** provided between the acousto-optical component (13) and the compensation element (31) is an intermediate element which is cemented to the acousto-optical component (13) and to the compensation element (31).

7. Optical arrangement according to one of Claims 1 to 6, **characterized in that** the compensation element can be driven at high frequency in order to block out components at the wavelength of the illumination light beam remaining in the detection light beam.

8. Scanning microscope having an optical arrangement according to one of Claims 1 to 7.

## Revendications

1. Système optique pour la séparation spatiale d'un rayon lumineux d'éclairage (11) et d'un rayon lumineux de détection (29) circulant en sens inverse avec un composant acousto-optique (13) et avec un élément de compensation (31), qui compense un dédoublement du rayon lumineux de détection (29) causé par une double réfraction par le composant acousto-optique (13) lors d'un trajet unique, et dans lequel le composant acousto-optique (13) et l'élément de compensation (31) sont disposés de telle manière que le rayon lumineux d'éclairage (11) ne traverse que le composant acousto-optique (13), **caractérisé en ce que** l'élément de compensation (31) et le composant acousto-optique (13) présentent la même forme extérieure, sont fabriqués avec la même matière et possèdent la même structure cristalline, **en ce que** l'élément de compensation (31) est un autre composant acousto-optique (33), et **en ce que** l'élément de compensation (31) et le composant acousto-optique (13) sont orientés avec une rotation de 180° l'un par rapport à l'autre par rapport à la direction de propagation du rayon lumineux de détection (29) arrivant sur le composant acousto-optique.

2. Système optique selon la revendication 1, **caractérisé en ce que** le composant acousto-optique (13) est un AOTF (Acousto-Optical-Tunable-Filter) (15) ou un AOD (Acousto-Optical-Deflector) ou un AOM (Acousto-Optical-Modulator).

3. Système optique selon la revendication 1, **caractérisé en ce que** l'élément de compensation (31) compense un dédoublement du rayon lumineux de détection (29) causé par dispersion par le composant acousto-optique (13).

4. Système optique selon la revendication 1, **caractérisé en ce qu'**un dispositif pour générer un décalage de rayon est disposé après le composant acousto-optique (13) et l'élément de compensation (31).

5. Système optique selon l'une quelconque des revendications 1 à 4, **caractérisé en ce que** le composant acousto-optique (13) et l'élément de compensation (31) sont collés l'un à l'autre.

6. Système optique selon l'une quelconque des revendications 1 à 4, **caractérisé en ce qu'**il est prévu entre le composant acousto-optique (13) et l'élément de compensation (31), un élément intermédiaire qui est collé au composant acousto-optique (13) et à l'élément de compensation (31).

7. Système optique selon l'une quelconque des revendications 1 à 6, **caractérisé en ce que** l'élément de compensation peut être commandé avec une haute fréquence, pour supprimer des parties restant dans le rayon lumineux de détection avec la longueur d'onde du rayon lumineux d'éclairage.

8. Microscope à balayage avec un système optique selon l'une quelconque des revendications 1 à 7.
